# EUROPÄISCHE PATENTANMELDUNG

(11) **EP 4 345 131 A1**
(43) Veröffentlichungstag der Anmeldung: **03.04.2024**
(21) Anmeldenummer: 23197583.0
(22) Anmeldetag: 15.09.2023
(51) Int. Cl.: C08K 5/00, C09J 7/10, C09J 9/00, C09J 163/04

(54) **KATIONISCH HÄRTBARE KLEBEMASSE MIT DEFINIERTER FÄRBUNG IM AUSGEHÄRTETEN ZUSTAND**

(30) Priorität: 28.09.2022 DE 102022124903
(71) Anmelder: tesa SE, 22848 Norderstedt (DE)
(72) Erfinder: SCHUH, Dr. Christian, 22848 Norderstedt (DE); HEIDSIECK, Dr. Sven, 22848 Norderstedt (DE); BRINSTER, OLEG, 22848 Norderstedt (DE); PAPENBROOCK, Marten, 22848 Norderstedt (DE)
(74) Vertreter: tesa SE

(57) **Zusammenfassung**

Die Erfindung betrifft eine aushärtbare Klebemasse, umfassend: a) ein oder mehrere (Co-)Polymere, b) eine oder mehrere polymerisierbare Epoxid-Verbindungen, c) einen oder mehrere kationische Initiatoren, und d) einen oder mehrere Farbstoffe, wobei der eine oder die mehreren Farbstoffe ausgewählt sind aus der Gruppe bestehend aus Benzoyl-Leuco-Methylenblau, Leuco-Kristallviolett, Kristallviolettlacton, Ethylviolett, Methylviolett, Methylgrün, Ethylgrün, Nilblau, 1,4-Bis(mesitylamino)anthrachinon und Kupferphthalocyanin.

## Beschreibung

Die Erfindung betrifft eine aushärtbare Klebemasse und ein reaktives Klebeband umfassend eine entsprechende aushärtbare Klebemasse. Offenbart wird zudem die Verwendung entsprechender aushärtbarer Klebemassen und reaktiver Klebebänder zur Verklebung von zwei oder mehr Komponenten.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar. Aus dem Alltag sind insbesondere Haftklebebänder bekannt, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Insbesondere für den Einsatz in der industriellen Fertigungstechnik ist jedoch auch eine weitere Art von Klebebändern von großer Bedeutung. In diesen Klebebändern, die teilweise auch als reaktive Klebebänder bezeichnet werden, wird eine aushärtbare Klebemasse eingesetzt. Entsprechende aushärtbare Klebemassen haben in dem für die Applikation vorgesehenen Zustand noch nicht ihren maximalen Vernetzungsgrad erreicht und können durch äußere Einflüsse ausgehärtet werden, indem die Polymerisation in der aushärtbaren Klebemasse initiiert und dadurch der Vernetzungsgrad erhöht wird. Hierbei verändern sich die mechanischen Eigenschaften der nunmehr ausgehärteten Klebemasse, wobei insbesondere die Viskosität, die Oberflächenhärte und die Festigkeit zunehmen.

Aushärtbare Klebemassen sind im Stand der Technik bekannt und können aus chemischer Sicht sehr unterschiedliche Zusammensetzungen aufweisen. Diesen aushärtbaren Klebemassen ist gemein, dass die Vernetzungsreaktion durch externe Einflussfaktoren ausgelöst werden kann, beispielsweise durch Energiezufuhr, insbesondere durch Temperatur-, Plasma- oder Strahlenhärtung, und/oder den Kontakt mit einer die Polymerisation fördernden Substanz, wie es beispielsweise bei feuchtigkeitshärtenden Klebemassen der Fall ist. Beispielhafte Klebemassen sind beispielsweise in der DE 102015222028 A1, EP 3091059 A1, EP 3126402 B1, EP 2768919 B1, DE 102018203894 A1, WO 2017174303 A1, WO 2020119898 A1, JP 4611463 B2 und US 4661542 A offenbart.

Ein industriell besonders relevanter Typ von aushärtbaren Klebemassen sind die kationisch härtbaren Epoxidklebstoffen, deren Handhabungs- und Anwendungseigenschaften ebenso wie die realisierbaren Klebeeigenschaften für eine große Bandbreite an industriellen Anwendungen als besonders vorteilhaft angesehen werden. Trotz der bekannten Vorteile von kationisch härtbaren Epoxidklebstoffen weisen diese jedoch auch Eigenschaften auf, die für den Einsatz in modernen Fertigungsprozessen als nachteilig empfunden werden.

Im Falle von kationisch härtbaren Epoxidklebstoffen wird bei der thermischen bzw. UV-Licht Aktivierung nämlich eine starke Säure freigesetzt, die die kationische Epoxidhärtung startet. Hieraus folgt, dass in entsprechenden aushärtbaren Klebemassen während der Aushärtung stark schwankende und anspruchsvolle chemische Bedingungen herrschen können, wobei insbesondere der pH-Wert eine starke Zeitabhängigkeit zeigt und im Zuge der Härtung auch starke absolute Schwankungen hin zu sehr sauren Bedingungen erfahren kann. Diesen schwankenden chemischen Bedingungen sind neben den Epoxid-Verbindungen auch sämtliche anderen Komponenten in der aushärtenden Klebemasse ausgesetzt. Hieraus folgt, dass sich die physikalischen-chemischen Eigenschaften weiterer Bestandteile in der aushärtenden Klebemasse verändern können, insbesondere wenn diese beispielsweise eine pH-Abhängigkeit zeigen, wobei die zu erwartenden Änderungen für den Fachmann wegen der Komplexität der Systeme nur schwer vorherzusagen sind.

Eine Klasse von Verbindungen, welche regelmäßig in Klebemassen eingesetzt wird und die in vielen Fällen eine ausgeprägte pH-Abhängigkeit in ihren physikalischen-chemischen Eigenschaften zeigen, sind Farbstoffe, deren Absorptionsverhalten vom pH-Wert aber auch von anderen chemischen Vorgängen in der aushärtenden Klebemasse beeinflusst werden kann. Dies geschieht in vielen Fällen einerseits durch die direkte Wechselwirkung vieler Farbstoffe mit der durch den kationischen Initiator freigesetzten Supersäure sowie durch die Änderung im pH-Wert. Auch weitere Bestandteile von Initiatorsystemen, können in unerwarteter Weise mit den Farbstoffen wechselwirken. Auch zeigen andere Farbstoffe unter verschiedenen Einsatzbedingungen, insbesondere bei erhöhten Temperaturen und/oder während der Härtungszeiten von aushärtbaren Klebemassen unerwünschte und meist schwer vorherzusagenden Änderungen ihrer Farbe. In der Praxis zeigt sich dabei in vielen Fällen, dass insbesondere solche Farbstoffe, die zumindest vor der Aushärtung eine blaue Färbung von Klebemassen ermöglichen, beim Einsatz in kationisch härtbaren Epoxidklebstoffen während der Aushärtung schwer vorhersagbare Farbwechsel zeigen und der Erhalt von blauen ausgehärteten Klebemassen in vielen Fällen sehr herausfordernd ist.

Die vorstehend beschriebene Problematik ist dabei angesichts der Anforderung moderner Fertigungsprozesse, welche auf die Verklebung von Komponenten mit kationisch härtbaren Epoxidklebstoffen setzen, keinesfalls ein rein ästhetisches Problem. Die Färbung von Klebemassen dient in vielen Fällen nämlich nicht dem primären Zweck, den im Fertigungsprozess eigesetzten Arbeitskräften einen gefälligen Anblick zu bieten. Vielmehr handelt es sich bei der Färbung einer ausgehärteten Klebemasse und damit bei deren Absorptionsverhalten für elektromagnetische Strahlung einer Wellenlänge im Bereich des sichtbaren Lichts um einen wichtigen Parameter, auf den die nicht-invasive Sensorik moderner Fertigungsprozesse abgestimmt werden kann. In Verfahren zur Prozesskontrolle und Qualitätssicherung kann mittels optischer Sensoren beispielsweise detektiert werden, ob die ausgehärtete Klebemasse bzw. ein entsprechendes Klebeband an der korrekten Stelle platziert wurde, die Materialdicke den Vorgaben entspricht oder etwaige Trennliner vollständig entfernt wurden. Für diese Aufgaben kann mit Blick auf die Anlagenkosten und die benötigte Rechenleistung nicht nach Belieben auf komplexe Bildverarbeitungssysteme zurückgegriffen werden, die beispielswiese unter Einsatz von künstlicher Intelligenz auch komplexe Farbwechsel des beobachteten Objektes kompensieren könnten. Vielmehr soll die eingesetzte Sensorik naturgemäß möglichst simpel und robust gehalten werden, wobei beispielsweise der Einsatz einfacher Farbsensoren wünschenswert ist. Dies erfordert jedoch eine zuverlässige Farbeigenschaft der ausgehärteten Klebemassen, die viele der aus dem Stand der Technik bekannten kationisch härtbaren Epoxidklebstoffe aus den vorstehend beschriebenen Gründen nicht leisten können. Diese Problematik wird noch dadurch verstärkt, dass in vielen Branchen eine besonders ausgeprägte Nachfrage nach blauen kationisch härtbaren Epoxidklebstoffen besteht, die, wie vorstehend erläutert, besonders schwer zu erhalten sind. Diese Nachfrage kann dabei beispielsweise durch die technische Beschaffenheit der bei den Betrieben verbauten Farbsensoren oder die vom Anwender gewünschten Kontraste zum beklebten Substrat bedingt sein. Sie kann aber auch durch andere technische Vorgaben bedingt sein, beispielsweise dadurch, dass ein bestimmtes Transmissionsverhalten von elektromagnetischer Strahlung durch das Klebeband hindurch gefordert wird, durch das eine nachgelagerte strahlungsbasierte Analytik des beklebten Substrates ermöglicht wird.

Die primäre Aufgabe der vorliegenden Erfindung war es, die vorstehend beschriebenen Nachteile des Standes der Technik zu beseitigen oder zumindest zu verringern.

Insbesondere war es die Aufgabe der vorliegenden Erfindung, eine kationisch aushärtbare epoxid-basierte Klebemasse anzugeben, deren Farbe nach der Härtung besonders präzise eingestellt werden kann und deren Absorptionsverhalten für elektromagnetische Strahlung im Bereich des sichtbaren Lichtes im ausgehärteten Zustand sich in Abhängigkeit von den während der Aushärtung erfahrenen chemischen Bedingungen entsprechend nicht oder nur geringfügig ändert. Dabei war es eine Vorgabe der vorliegenden Erfindung, dass die anzugebende aushärtbare Klebemasse nach der Härtung eine blaue Färbung aufweisen können sollte.

Darüber hinaus war es eine Aufgabe der vorliegenden Erfindung, dass die anzugebende aushärtbare Klebemasse als zumindest teilweise transparente Klebemasse mit einem geringen Maß an Opazität ausführbar sein sollte.

Ebenfalls war es eine Aufgabe der vorliegenden Erfindung, dass die anzugebende aushärtbare Klebemasse als Haftklebemasse aber auch als flüssiger Klebstoff ausführbar sein sollte, wobei es wünschenswerterweise nicht oder nur im geringen Maße zu einer Sedimentierung des Farbstoffes kommen sollte.

Es war eine weitere Aufgabe der vorliegenden Erfindung, dass die anzugebende aushärtbare Klebemasse eine größtmögliche Flexibilität hinsichtlich der sonstigen chemischen Zusammensetzung und damit hinsichtlich der im Zuge der Aushärtung erreichbaren physikalisch-chemischen Eigenschaften aufweisen sollte. Insbesondere sollte die anzugebende aushärtbare Klebemasse überwiegend auch aus solchen Komponenten herstellbar sein, die für herkömmliche aushärtbare Klebemassen verwendet werden.

Dabei war es eine grundsätzliche Maßgabe, dass die anzugebende aushärtbare Klebemasse zuverlässig aushärtbar sein sollte und ausgezeichnete klebtechnische Eigenschaften aufweisen sollte.

Es war eine ergänzende Aufgabe der vorliegenden Erfindung, ein vorteilhaftes reaktives Klebeband bzw. Haftklebband bereitzustellen.

Zudem war es eine sekundäre Aufgabe der vorliegenden Erfindung, eine Verwendung der anzugebenden aushärtbaren Klebemassen bzw. reaktiver Klebebänder zur Verklebung von zwei oder mehr Komponenten bereitzustellen.

Die Erfinder der vorliegenden Erfindung haben nunmehr gefunden, dass sich die vorstehend beschriebenen Aufgaben überraschenderweise lösen lassen, wenn in epoxid-basierten aushärtbaren Klebemassen, welche über einen kationischen Initiator härten, ein oder mehrere spezifische Farbstoffe eingesetzt werden, wie es in den Ansprüchen definiert ist. Die resultierenden aushärtbaren Klebemassen zeigen, ohne dass für die Erfinder hierfür ein chemischer Grund ersichtlich wäre, überraschenderweise eine ausgezeichnete Farbstabilität in der ausgehärteten Klebemasse und ermöglichen insbesondere auch den Erhalt von blauen aushärtbaren Klebemassen, die auch nach längerer Lagerung bei anspruchsvollen Umweltbedingungen eine vorteilhafte Farbstabilität zeigen und ein präzise einstellbares Absorptionsverhalten für elektromagnetische Strahlung im Bereich des sichtbaren Lichtes zeigen.

Nach Erkenntnis der Erfinder zeigen die spezifischen Farbstoffe ihr vorteilhaftes Verhalten dabei im Wesentlichen unabhängig von der chemischen Natur der sonstigen Komponenten, so dass sie mit einer breiten Palette von industriell relevanten aushärtbaren Klebemassen kompatibel sind. Zudem sind die Farbstoffe gut in den sonstigen Bestandteilen der aushärtbaren Klebemasse löslich, so dass in effizienter Weise auch flüssige aushärtbare Klebemassen erhalten werden können und grundsätzlich eine niedrige Opazität erreichbar ist. Die aushärtbaren Klebemassen zeigen ausgehend von den Experimenten der Erfinder ein gutes Aushärteverhalten und erlauben eine flexible Einstellung der klebtechnischen Eigenschaften an die jeweiligen Anwendungsanforderungen
Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Klebebänder und Verwendungen ergeben sich aus den Merkmalen bevorzugter aushärtbarer Klebemassen.

Insoweit nachfolgend für ein Element, beispielsweise für die (Co-)Polymere oder die polymerisierbaren Epoxid-Verbindungen, sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw. Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die Erfindung betrifft eine aushärtbare Klebemasse, umfassend:
a) ein oder mehrere (Co-)Polymere,
b) eine oder mehrere polymerisierbare Epoxid-Verbindungen,
c) einen oder mehrere kationische Initiatoren, und
d) einen oder mehrere Farbstoffe,
wobei der eine oder die mehreren Farbstoffe ausgewählt sind aus der Gruppe bestehend aus Benzoyl-Leuco-Methylenblau, Leuco-Kristallviolett, Kristallviolettlacton, Ethylviolett, Methylviolett, Methylgrün, Ethylgrün, Nilblau, 1,4-bis(mesitylamino)anthrachinon und Kupferphthalocyanin.

Aushärtbare Klebemassen sind dem Fachmann, wie vorstehend beschrieben, aus dem Stand der Technik umfassend bekannt, wobei auch die vorstehend angegebenen Einzelkomponenten dem Fachmann isoliert bekannt und in verschiedenen Variationen von zahlreichen verschiedenen Anbietern kommerziell erhältlich sind, wobei nachfolgend zudem bevorzugte und beispielhafte Vertreter für die einzelnen Komponenten offenbart werden.

Diese vorstehend definierten Bestandteile werden in Übereinstimmung mit dem fachmännischen Verständnis jeweils als "ein oder mehrere" eingesetzt. Die Bezeichnung "ein oder mehrere" bezieht sich dabei in branchenüblicher Weise auf die chemische Natur der entsprechenden Verbindungen und nicht auf deren Stoffmenge. Beispielsweise kann die aushärtbare Klebemasse als polymerisierbare Epoxidverbindung ausschließlich Epoxycyclohexylmethyl-3',4'-epoxycyclohexancarboxylat umfassen, was bedeuten würde, dass die aushärtbare Klebemasse eine Vielzahl der entsprechenden Moleküle umfasst.

Die erfindungsgemäße aushärtbare Klebemasse ist aushärtbar. Durch die Möglichkeit zur Härtung kann die aushärtbare Klebemasse nach der Härtung als Strukturklebstoff fungieren. Nach DIN EN 923: 2006-01 sind Strukturklebstoffe nachweisbar geeignet zur Herstellung lasttragender Konstruktionen, bei denen die Klebverbindung über längere Zeiträume mit einem hohen Prozentwert der maximalen Bruchkraft ohne Versagen beansprucht werden kann (nach ASTM-Definition: "bonding agents used for transferring required loads between adherends exposed to service environments typical for the structure involved"). Es sind also Klebstoffe für chemisch und physikalisch hoch beanspruchbare Klebungen, die im ausgehärteten Zustand zur Verfestigung der Klebebänder beitragen.

Der Fachmann versteht, dass aus der Aufgabe, aushärtbare Klebemassen bereitzustellen, welche nach Aushärtung blau sind, folgt, dass es sich um erfindungsgemäße aushärtbare Klebemasse handelt, wobei die aushärtbare Klebemasse durch Aushärtung in eine blaue ausgehärtete Klebemasse umgesetzt werden kann. Bevorzugt ist insoweit eine erfindungsgemäße aushärtbare Klebemasse, wobei die aushärtbare Klebemasse vor der Aushärtung eine blaue Klebemasse ist.

Zentral für die erfindungsgemäße aushärtbare Klebemasse ist, dass die aushärtbare Klebemasse einen oder mehrere spezifische Farbstoffe enthält, die ausgewählt sind aus der Gruppe bestehend aus Benzoyl-Leuco-Methylenblau (CAS: 1249-97-4), Leuco-Kristallviolett (CAS: 603-48-5), Kristallviolettlacton (CAS: 1552-42-7), Ethylviolett (CAS: 2390-59-2), Methylviolett (CAS: 8004-87-3), Methylgrün (CAS: 7114-03-6), Ethylgrün (CAS: 14855-76-6), Nilblau (CAS: 2381-85-3 (Hydrochlorid), 3625-57-8 (Sulfat) und CAS: 53340-16-2 (Perchlorat)), 1,4-Bis(mesitylamino)anthrachinon (CAS: 116-75-6) und Kupferphthalocyanin (*29H*,31*H*-Phthalocyanin Kupfer Komplex, CAS: 147-14-8).

In den Experimenten der Erfinder wurden die insgesamt ansprechendsten Ergebnisse hinsichtlich der Färbung mit Benzoyl-Leuco-Methylenblau, Leuco-Kristallviolett, Kristallviolettlacton, Ethylviolett, Methylviolett, Nilblau, 1,4-Bis(mesitylamino)anthrachinon und Kupferphthalocyanin erzielt. Bevorzugt ist demgemäß zunächst eine erfindungsgemäße aushärtbare Klebemasse wobei der eine die mehreren Farbstoffe ausgewählt sind aus der Gruppe bestehend aus Benzoyl-Leuco-Methylenblau, Leuco-Kristallviolett, Kristallviolettlacton, Ethylviolett, Methylviolett, Nilblau, 1,4-Bis(mesitylamino)anthrachinon und Kupferphthalocyanin.

In eigenen Experimenten haben die Erfinder gefunden, dass von den vorstehend angegebenen Farbstoffen das Leuco-Kristallviolett und das Kristallviolettlacton überraschenderweise in einigen Fällen die Aushärtung der aushärtbaren Klebemasse stärker beeinflussen als die übrigen Farbstoffe. Für Leuco-Kristallviolett und Kristallviolettlacton war in einigen Experimenten eine thermische Nachhärtung notwendig, um eine hohe Verklebungsfestigkeit zu erreichen. Eine solche thermische Nachhärtung wird in einigen Fertigungsprozessen und für bestimmte aushärtbare Klebemassen ohnehin vorgesehen, so dass dieser Nachteil in bestimmten Anwendungen wenig zum Tragen kommt. Nichtsdestotrotz sehen die Erfinder die übrigen Farbstoffe mit Blick auf das Aushärtungsverhalten als vorteilhafter an. Bevorzugt ist entsprechend eine erfindungsgemäße aushärtbare Klebemasse, wobei der eine die mehreren Farbstoffe ausgewählt sind aus der Gruppe bestehend aus Benzoyl-Leuco-Methylenblau, Ethylviolett, Methylviolett, Methylgrün, Ethylgrün, Nilblau, 1,4-bis(mesitylamino)anthrachinon und Kupferphthalocyanin. Besonders bevorzugt ist entsprechend eine erfindungsgemäße aushärtbare Klebemasse, wobei der eine die mehreren Farbstoffe ausgewählt sind aus der Gruppe bestehend aus Benzoyl-Leuco-Methylenblau, Ethylviolett, Nilblau, 1,4-Bis(mesitylamino)anthrachinon und Kupferphthalocyanin. Weiter bevorzugt findet keine thermische Nachhärtung statt bzw. wird keine thermische Nachhärtung benötigt.

Die Erfinder haben in ihren Versuchen insbesondere für Kupferphthalocyanin eine hervorragende Blaustabilität und ein besonders günstiges Aushärteverhalten gefunden. Ganz besonders bevorzugt ist entsprechend eine erfindungsgemäße aushärtbare Klebemasse, wobei der Farbstoff Kupferphthalocyanin ist.

Trotz der vorteilhaften Ergebnisse, die mit Kupferphthalocyanin beobachtet werden, zeigt dieser Farbstoff hinsichtlich der Löslichkeit in erfindungsgemäßen aushärtbaren Klebemassen teilweise ein weniger vorteilhaftes Verhalten als die anderen Farbstoffe. Dies kann sich für manche Anwendungen in flüssigen aushärtbaren Klebemassen als weniger vorteilhaft erweisen. Vor diesem Hintergrund sind für bestimmte Anwendungen auch erfindungsgemäße aushärtbare Klebemasse bevorzugt, wobei der eine oder die mehreren Farbstoffe ausgewählt sind aus der Gruppe bestehend aus Benzoyl-Leuco-Methylenblau, Leuco-Kristallviolett, Kristallviolettlacton, Ethylviolett, Methylviolett, Methylgrün, Ethylgrün, Nilblau und 1,4-Bis(mesitylamino)anthrachinon, bevorzugt ausgewählt sind aus der Gruppe bestehend aus Benzoyl-Leuco-Methylenblau, Ethylviolett, Methylviolett, Methylgrün, Ethylgrün, Nilblau und 1,4-Bis(mesitylamino)anthrachinon oder der Gruppe bestehend aus Benzoyl-Leuco-Methylenblau, Leuco-Kristallviolett, Kristallviolettlacton, Ethylviolett, Methylviolett, Nilblau und 1,4-Bis(mesitylamino)anthrachinon, besonders bevorzugt Benzoyl-Leuco-Methylenblau, Ethylviolett, Nilblau und 1,4-Bis(mesitylamino)anthrachino.

Die erfindungsgemäßen aushärtbaren Klebemassen können in vorteilhafter Weise prinzipiell auch als flüssige Systeme bereitgestellt werden, da die spezifischen Farbstoffe sich in den sonstigen Komponenten lösen und/oder zumindest nicht stark zur Sedimentierung neigen. Für den späteren Einsatz in der Endanwendung ist es für die Handhabungseigenschaften jedoch vorteilhaft, wenn die aushärtbare Klebemasse eine intrinsische Haftklebrigkeit aufweist und somit als Haftklebemasse klassifiziert werden kann. Die Haftklebrigkeit erlaubt vor der Aushärtung der aushärtbaren Klebemassen eine zuverlässige und sichere Applikation der reaktiven Klebebänder am Substrat. Bevorzugt ist demgemäß eine erfindungsgemäße aushärtbare Klebemasse, wobei die aushärtbare Klebemasse eine Haftklebemasse ist. Zur Umsetzung der Haftklebrigkeit ist es nach Einschätzung der Erfinder zweckmäßig, den kombinierten Massenanteil der (Co-)Polymere in der aushärtbaren Klebemasse auf 25 % oder mehr, bevorzugt 30 % oder mehr, besonders bevorzugt 35 % oder mehr, einzustellen.

Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G`) und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10° bis 10¹ rad/sec G` und G" jeweils zumindest zum Teil im Bereich von 10³ bis 10⁷ Pa liegen.

Nachfolgend werden die in der erfindungsgemäßen aushärtbaren Klebemasse enthaltenen Komponenten näher erläutert. Insoweit ist es den Erfindern gelungen, jeweils besonders bevorzugte Ausgestaltungen und Massenanteile für die einzelnen Komponenten zu identifizieren, mit denen sich leistungsfähige erfindungsgemäße aushärtbare Klebemasse erhalten lassen. In branchenüblicher Weise werden dabei die Massenanteile als kombinierte Massenanteile der einen oder der mehreren Komponenten angegeben, wodurch ausgedrückt wird, dass der Massenanteil der entsprechend ausgebildeten Komponenten zusammengenommen die entsprechenden Kriterien erfüllt, wobei in Abwesenheit anderer Angaben jeweils die Masse der aushärtbaren Klebemasse das Bezugssystem ist.

Der Fachmann versteht, dass den (Co-)Polymeren in üblicher Weise die Rolle des Filmbildners zufällt, die insbesondere dann von Bedeutung wird, wenn beispielsweise Haftklebemassen erhalten werden sollen. Mit anderen Worten handelt es sich beim Einsatz vom im Bereich der Klebetechnik üblichen (Co-)Polymeren somit um eine aushärtbare Klebemasse, wobei das eine oder die mehreren (Co-)Polymere ausgewählt sind aus der Gruppe bestehend aus filmbildenden (Co-)Polymeren.

Bevorzugt ist dabei zusätzlich oder alternativ eine erfindungsgemäße aushärtbare Klebemasse, wobei das eine oder die mehreren (Co-)Polymere ausgewählt sind aus der Gruppe bestehend aus Poly(meth)acrylaten, Polyurethanen, Polyvinylacetalen, wie z.B. Polyvinylbutyral, Polysiloxanen, Synthesekautschuken, Polyestern, Phenoxypolymeren, Polyvinylalkoholen, Polyvinylalkoholcopolymere, und Alken-Vinylacetat-Copolymeren, bevorzugt ausgewählt sind aus der Gruppe bestehend aus Poly(meth)acrylaten, Phenoxypolymeren, Polyvinylalkoholen, Polyvinylalkoholcopolymeren, Polyvinylacetalen, wie z.B. Polyvinylbutyral, und Ethylen-Vinylacetat-Copolymeren (EVA oder EVAC; Poly(ethylen-co-vinylacetat)), insbesondere ausgewählt sind aus der Gruppe bestehend aus Poly(meth)acrylaten, Phenoxypolymeren und Ethylen-Vinylacetat-Copolymeren.

Zusätzlich oder alternativ können als (Co-)Polymere auch Blockcopolymere, bspw. (Meth)acrylat-Blockcopolymere eingesetzt werde. Entsprechende Beispiele sind beispielsweise in den Dokumenten US 2011003947 A1, US 20080200589 A1, US 2007078236 A1, US 2007078236 A1, US 2012196952 A1, US 2016032157 A1, US 2008146747 A1 und US 2016230054 A1 offenbart.

Die zahlenmittleren Molmassen Mₙ der (Co-)Polymere liegen bevorzugt in einem Bereich von 50.000 bis 10.000.000 g/mol, besonders bevorzugt in einem Bereich von 100.000 bis 5.000.000 g/mol, ganz besonders bevorzugt in einem Bereich von 150.000 bis 2.000.000 g/mol. Die Angaben der zahlenmittleren Molmasse Mₙ beziehen sich dabei auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Å, 8,0 mm * 50 mm (Angaben hier und im Folgenden in der Reihenfolge: Typ, Partikelgröße, Porosität, Innendurchmesser * Länge; 1 Å = 10⁻¹⁰ m) verwendet. Zur Auftrennung wird eine Kombination der Säulen des Typs PSS-SDV, 5 µm, 10³ Å sowie 10⁵ Å und 10⁶ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Polyacrylaten gegen PMMA-Standards (Polymethylmethacrylat-Kalibrierung) und sonst (Harze, Elastomere) gegen PS-Standards (Polystyrol-Kalibrierung).

Bevorzugt ist unabhängig von der spezifischen Auswahl der (Co-)Polymere eine erfindungsgemäße aushärtbare Klebemasse, wobei der kombinierte Massenanteil der (Co-)Polymere in der aushärtbaren Klebemasse im Bereich von 1 bis 70 %, bevorzugt im Bereich von 2 bis 60 %, besonders bevorzugt im Bereich von 5 bis 50 %, ganz besonders bevorzugt im Bereich von 10 bis 40 %, liegt, bezogen auf die Masse der aushärtbaren Klebemasse. Wie vorstehend erläutert ist es zum Erhalt einer haftklebrigen aushärtbaren Klebemasse zweckmäßig, den kombinierten Massenanteil der (Co-)Polymere in der aushärtbaren Klebemasse auf 25 % oder mehr, bevorzugt 30 % oder mehr, besonders bevorzugt 35 % oder mehr, ganz besonders bevorzugt in einem Bereich von 25 bis 40 %, einzustellen.

Die erfindungsgemäße aushärtbare Klebemasse umfasst neben den (Co-)Polymeren auch zumindest eine polymerisierbare Epoxidverbindung sowie optional weitere polymerisierbare Verbindungen. Diese Verbindungen bilden zusammen den vom Fachmann häufig als Reaktivharz bezeichneten Teil der aushärtbaren Klebemasse.

Der Ausdruck "polymerisierbar" bezieht sich hierbei in Übereinstimmung mit dem fachmännischen Verständnis auf die Fähigkeit dieser Verbindungen, ggf. nach geeigneter Aktivierung, eine Polymerisationsreaktion einzugehen. Im Falle der polymerisierbaren Epoxidverbindungen wird die Polymerisierbarkeit beispielsweise durch die Epoxid-Gruppen ermöglicht.

In Übereinstimmung mit dem fachmännischen Verständnis sind Epoxid-Verbindungen solche Verbindungen, die zumindest eine Oxiran-Gruppe tragen. Sie können aromatischer oder aliphatischer, insbesondere cycloaliphatischer, Natur sein. Polymerisierbare Epoxid-Verbindungen können sowohl monomere als auch oligomere beziehungsweise polymere Epoxid-Verbindungen umfassen. Polymerisierbare Epoxidverbindungen weisen häufig im Durchschnitt wenigstens zwei Epoxidgruppen pro Molekül, vorzugsweise mehr als zwei Epoxidgruppen pro Molekül, auf. Bevorzugt ist insoweit eine erfindungsgemäße aushärtbare Klebemasse, wobei die eine oder die mehreren polymerisierbaren Epoxid-Verbindungen ausgewählt sind aus der Gruppe bestehend aus Epoxid-Verbindungen mit zwei oder mehr Epoxidgruppen, bevorzugt zwei Epoxidgruppen.

Die oligomeren beziehungsweise polymeren Epoxidverbindungen umfassen zumeist lineare Polymere mit endständigen Epoxidgruppen (z. B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder -copolymer). Das Molekulargewicht solcher Epoxidverbindungen kann von 58 bis etwa 100.000 g/mol oder mehr variieren, wobei das Molekulargewicht eine wichtige Stellgröße für die Einstellung der dynamischen Viskosität ist. Beispielhafte polymerisierbare Epoxidverbindungen umfassen Epoxycyclo-hexancarboxylate, wie beispielsweise 4-Epoxycyclohexylmethyl-3,4-epoxycyclohexancarboxylat, 3,4-Epoxy-2-methylcyclohexylmethyl-3,4-epoxy-2-methylcyclohexancarboxylat und Bis(3,4-epoxy-6-methylcyclohexylmethyl)adipat. Weitere Beispiele für polymerisierbare Epoxidverbindungen sind beispielsweise in der US 3,117,099 A offenbart. Weitere polymerisierbare Epoxidverbindungen, die bei der Anwendung dieser Erfindung besonders nützlich sind, umfassen Glycidylethermonomere, wie sie beispielsweise in der US 3,018,262 offenbart sind. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Insbesondere Diglycidylether von Bisphenolen, wie z.B. Bisphenol-A (4,4'-(Propan-2,2-diyl)diphenol) und Bisphenol-F (Bis(4-hydroxyphenyl)methan). Solche Reaktionsprodukte sind kommerziell in unterschiedlichen Molekulargewichten und Aggregatzuständen erhältlich (beispielsweise sogenannte Typ 1 bis Typ 10 BADGE-Harze). Typische Beispiele für flüssige Bisphenol-A-Diglycidylether sind Epikote 828, D.E.R.331 und Epon 828. Typische feste BADGE-Harze sind Araldite GT6071, GT7072, Epon 1001 und D.E.R. 662. Weitere Umsetzungsprodukte von Phenolen mit Epichlorhydrin sind die Phenol- und Cresolnovolakharze wie z.B. die Epiclon Typen oder Araldite EPN und ECN Typen (z.B. ECN1273).

Bevorzugt ist nach Einschätzung der Erfinder eine erfindungsgemäße aushärtbare Klebemasse, wobei die eine oder die mehreren polymerisierbaren Epoxid-Verbindungen ausgewählt sind aus der Gruppe bestehend aus Epoxid-Verbindungen mit zumindest einer cycloaliphatischen Gruppe, insbesondere einer Cyclohexylgruppe oder Dicyclopentadienylgruppe. Bevorzugt ist zusätzlich oder alternativ eine erfindungsgemäße aushärtbare Klebemasse, wobei die eine oder die mehreren polymerisierbaren Epoxid-Verbindungen ausgewählt sind aus der Gruppe bestehend aus Bisphenol-A-Diglycidylethern und Bisphenol-F-Diglycidylethern, bevorzugt Bisphenol-A-Diglycidylethern.

Nach Einschätzung der Erfinder lassen sich besonders vorteilhafte aushärtbare Klebemasse erhalten, wenn zwei oder mehr verschiedene polymerisierbare Epoxid-Verbindungen eingesetzt werden, insbesondere wenn sich diese bei Raumtemperatur hinsichtlich ihres Aggregatzustandes unterscheiden. Bevorzugt ist eine erfindungsgemäße aushärtbare Klebemasse, wobei die aushärtbare Klebemasse eine oder mehrere polymerisierbare Epoxid-Verbindungen umfasst, die ausgewählt sind aus der Gruppe von Epoxid-Verbindungen, die bei 25 °C Feststoffe oder hochviskose Stoffe mit einer dynamische Viskosität von 50 Pa s oder mehr, bevorzugt 100 Pa s oder mehr, besonders bevorzugt 150 Pa s oder mehr, sind, und/oder wobei die aushärtbare Klebemasse eine oder mehrere polymerisierbare Epoxid-Verbindungen umfasst, die ausgewählt sind aus der Gruppe von Epoxid-Verbindungen, die bei 25 °C eine Flüssigkeit mit einer dynamischen Viskosität von 40 Pa s oder weniger, bevorzugt 20 Pa s oder weniger, ganz besonders bevorzugt 10 Pa s oder weniger, sind. Im Rahmen der vorliegenden Erfindung wird die dynamische Viskosität dabei gemäß der DIN 53019-1 aus 2008; bei 25 °C, mit einer Schergeschwindigkeit von 1 s⁻¹ bestimmt.

Bevorzugt ist unabhängig von der spezifischen Auswahl der polymerisierbaren Epoxid-Verbindungen eine erfindungsgemäße aushärtbare Klebemasse, wobei der kombinierte Massenanteil der polymerisierbaren Epoxid-Verbindungen in der aushärtbaren Klebemasse im Bereich von 35 bis 95 %, bevorzugt im Bereich von 40 bis 90 %, besonders bevorzugt im Bereich von 45 bis 85 %, ganz besonders bevorzugt im Bereich von 50 bis 80 %, liegt, bezogen auf die Masse der aushärtbaren Klebemasse.

Die erfindungsgemäßen aushärtbaren Klebemassen umfassen zumindest einen kationischen Initiator. Entsprechende kationische Initiatoren sind dem Fachmann ausgehend von seinem allgemeinen Fachwissen bekannt und insbesondere im Bereich der Epoxid-basierten reaktiven Klebemassen häufig im Einsatz. Der Fachmann stimmt das zur Aushärtung verwendete Katalysatorsystem im Wesentlichen auf die Anwendungsanforderungen und die eingesetzten polymerisierbaren Epoxid-Verbindungen ab.

Mit Blick auf die späteren Handhabungseigenschaften ist es nach Einschätzung der Erfinder besonders vorteilhaft, strahlungsvernetzende und/oder thermisch vernetzende Systeme einzusetzen, wobei insbesondere die Strahlungsaktivierung große handhabungstechnische Vorteile liefert. Bevorzugt ist dabei eine erfindungsgemäße aushärtbare Klebemasse, wobei der eine oder die mehreren kationischen Initiatoren ausgewählt sind aus der Gruppe bestehend aus strahlungsaktivierten Initiatoren und thermisch aktivierten Initiatoren, bevorzugt ausgewählt sind aus der Gruppe bestehend aus strahlungsaktivierten Initiatoren, bzw. wobei die aushärtbare Klebemasse eine strahlungshärtende und/oder thermisch härtende, bevorzugt strahlungshärtende, Klebemasse ist.

Als thermisch aktivierte kationische Initiatoren sind beispielsweise latente, thermisch aktivierbare kationische Initiatoren (TAG; sogenannte "thermal acid generator") bevorzugt Geeignete TAG sind dem Fachmann bekannt und kommerziell von zahlreichen Anbietern verfügbar. Bevorzugt sind TAG, die ein Kation umfassen, das ausgewählt ist aus der Gruppe bestehend aus 4-substituiertem Benzylanilinium, 4-substituiertem Benzylpyridinium, 4-substituiertem Benzylphosphonium, S-substituiertem Diphenylsulfonium und substituiertem Aryl-benzylsulfonium, bevorzugt ausgewählt ist aus der Gruppe bestehend aus 4-substituiertem Benzylanilinium. Der TAG kann prinzipiell ein beliebiges Anion enthalten, wobei schwach koordinierende Anionen wie Tetrafluorborat (BF₄⁻), Hexafluorphosphat (PF₆⁻), Hexafluorantimonat (SbF₆⁻), Tetrakis(pentafluorphenyl)borat (B(C₆F₅)₄⁻) und Trifluormethylsulfonat (F₃CSO₃⁻) bevorzugt sind. Besonders bevorzugt sind hierbei Trifluormethylsulfonat (F₃CSO₃⁻) und Hexafluorantimonat (SbF₆⁻).

Vorteilhaft sind solche Kombinationen eines TAG aus Kation und Anion, bei denen der resultierende Initiator eine Aktivierungstemperatur im Bereich von 50 °C bis 150 °C aufweist, wobei der Fachmann die Aktivierungsenergie bevorzugt auf die jeweiligen Anwendungsanforderungen einstellt, wobei insbesondere ein Bereich von 80 °C bis 120 °C in vielen Fällen bevorzugt ist, um die Polymerisation bei einer vergleichsweise moderaten Aktivierungstemperatur durchführen zu können und trotzdem eine klar abgegrenzte Initiierung zu ermöglichen. Die Aktivierungstemperatur von reaktiven bzw. chemisch aktivierbaren Klebemassen im Allgemeinen bzw. der eingesetzten TAG wird kalorimetrisch über die Differential Scanning Calorimetry (DSC) nach DIN EN ISO 11357-3:2013-04 bestimmt. Hierzu werden ungefähr 20 mg der Probe in einen Aluminiumtiegel eingewogen und in das Messgerät (Gerät: DSC 204 F1, Fa. Netzsch) eingebracht. Anschließend werden zwei Aufheizkurven mit einer Aufheizrate von 10 K/min aufgenommen. Die Muster werden in Al-Tiegeln mit gelochtem Deckel und Stickstoffatmosphäre vermessen. Eine chemische Reaktion wie die Aktivierung des TAG ist als exothermer Peak im Thermogramm erkennbar. Als Aktivierungstemperatur wird die Onset-Temperatur notiert. Diese wird für einen Peak als Schnittpunkt der virtuellen interpolierten Basislinie und der im Wendepunkt des Peakanfangs angelegten Tangente bestimmt (nach DIN EN ISO 11357-1:2010-03). Durch Integration des Härtungspeaks wird die Reaktionsenthalpie in J/g erhalten.

Als Initiatoren für eine kationische strahlungsbasierte, d.h. häufig UV induzierte, Härtung von Epoxid-Verbindungen sind insbesondere Sulfonium, Iodonium und Metallocen basierende Systeme einsetzbar. Für Beispiele für Sulfonium basierende Kationen sei auf die Ausführungen in US 6,908,722 B1 verwiesen. Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amide und Tris-(trifluoromethylsulfonyl)-methide genannt. Zudem sind insbesondere für lodonium-basierende Initiatoren auch Chlorid, Bromid oder Iodid als Anionen denkbar, wobei aber Initiatoren, die im Wesentlichen frei von Chlor und Brom sind, bevorzugt sind. Ein leistungsfähiges Beispiel für ein solches System ist beispielsweise Triphenylsulfoniumhexafluoroantimonat. Weitere geeignete Initiatoren sind beispielsweise in der US 3,729,313 A, US 3,741,769 A, US 4,250,053 A, US 4,394,403 A, US 4,231,951 A, US 4,256,828 A, US 4,058,401 A, US 4,138,255 A und US 2010/063221 A1 offenbart.

Konkrete Beispiele für einsetzbare Sulfonium-Salze sind insbesondere Triarylsulfonium-Salze, beispielsweise Triphenylsulfoniumhexafluoroarsenat, Triphenylsulfoniumhexafluoroborat, Triphenylsulfoniumtetrafluoroborat, Triphenylsulfoniumtetrakis-(pentafluorobenzyl)-borat, Methyldiphenylsulfoniumtetrafluoroborat, Methyldiphenylsulfoniumtetrakis-(pentafluorobenzyl)-borat, Dimethylphenylsulfoniumhexafluorophosphat, Triphenylsulfoniumhexafluorophosphat, Triphenylsulfoniumhexafluoroantimonat, Diphenylnaphthylsulfoniumhexafluoroarsenat, Tritolylsulfoniumhexafluorophosphat, Anisyldiphenylsulfoniumhexafluoroantimonat, 4-Butoxyphenyldiphenylsulfoniumtetrafluoroborat, 4-Chlorophenyldiphenylsulfoniumhexafluoroantimonat, Tris-(4-phenoxyphenyl)-sulfoniumhexafluorophosphat, Di-(4-ethoxyphenyl)-methylsulfoniumhexafluoroarsenat, 4-Acetylphenyldiphenylsulfoniumtetrafluoroborat, 4-Acetylphenyldiphenylsulfoniumtetrakis-(pentafluorobenzyl)-borat, Tris-(4-thiomethoxyphenyl)-sulfoniumhexafluorophosphat, Di-(methoxysulfonylphenyl)-methylsulfonium-hexafluoroantimonat, Di-(methoxynaphthyl)-methylsulfoniumtetrafluoroborat, Di-(methoxynaphthyl)-methylsulfoniumetrakis-(penta-fluorobenzyl)borat, Di-(carbomethoxyphenyl)-methylsulfoniumhexa-fluorophosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(pentafluorophenyl)-borat, Tris-(dodecyl-phenyl)-sulfoniumtetrakis-(3,5-bis-trifluoromethylphenyl)-borat, 4-Acetamidphenyldiphe-nylsulfoniumtetrafluoroborat, 4-Acetamidphenyldiphenylsulfoniumtetrakis-(pentafluoro-benzyl)-borat, Dimethylnaphthylsulfoniumhexafluorophosphat, Trifluoromethyldiphenyl-sulfoniumtetrafluoroborat, Trifluoromethyldiphenylsulfoniumtetrakis-(pentafluorobenzyl)-borat, Phenylmethylbenzylsulfoniumhexafluorophosphat, 5-Methylthianthreniumhexa-fluorophosphat, 10-Phenyl-9,9-dimethylthioxanthenium-hexafluorophosphat, 10-Phenyl-9-oxothioxantheniumtetrafluoroborat, 10-Phenyl-9-oxothioxantheniumtetrakis-(pentafluoro-benzyl)-borat, 5-Methyl-10-oxothianthreniumtetrafluoroborat, 5-Methyl-10-oxothianthreni-umtetrakis-(pentafluorobenzyl)-borat und 5-Methyl-10,10-dioxothianthrenium-hexafluorophosphat.

Konkrete Beispiele für einsetzbare lodonium-Salze sind Diphenyliodoniumtetrafluoroborat, Di-(4-methylphenyl)-iodoniumtetrafluoroborat, Phenyl-4-methylphenyliodoniumtetrafluoroborat, Di-(4-chlorphenyl)-iodoniumhexafluorophosphat, Dinaphthyliodoniumtetrafluoroborat, Di-(4-trifluormethylphenyl)-iodoniumtetrafluoroborat, Diphenyliodoniumhexafluorophosphat, Di-(4-methylphenyl)-iodoniumhexafluorophosphat, Diphenyliodoniumhexafluoroarsenat, Di-(4-phenoxyphenyl)-iodoniumtetrafluoroborat, Phenyl-2-thienyliodoniumhexafluorophosphat, 3,5-Dimethylpyrazolyl-4-phenyliodoniumhexafluorophosphat, Diphenyliodoniumhexafluoroantimonat, 2,2'-Diphenyliodoniumtetrafluoroborat, Di-(2,4-dichlorphenyl)-iodoniumhexafluorophosphat, Di-(4-bromphenyl)-iodoniumhexafluorophosphat, Di-(4-methoxyphenyl)-iodoniumhexafluorophosphat, Di-(3-carboxyphenyl)-iodoniumhexafluorophosphat, Di-(3-methoxycarbonylphenyl)-iodoniumhexafluorophosphat, Di-(3-methoxysulfonylphenyl)-iodoniumhexafluorophosphat, Di-(4-acetamidophenyl)-iodoniumhexafluoro-phosphat, Di-(2-benzothienyl)-iodoniumhexafluorophosphat, Diaryliodoniumtristrifluormethylsulfonylmethid wie Diphenyliodoniumhexafluoroantimonat, Diaryliodoniumtetrakis-(pentafluorophenyl)-borat wie Diphenyliodoniumtetrakis-(pentafluorophenyl)-borat, [4-(2-Hydroxy-n-tetradesiloxy)-phenyl]-phenyliodoniumhexafluoroantimonat, [4-(2-Hydroxy-n-tetradesiloxy)-phenyl]-phenyliodoniumtrifluorosulfonat, [4-(2-Hydroxy-n-tetradesiloxy)-phenyl]-phenyl-iodoniumhexafluorophosphat, [4-(2-Hydroxy-n-tetradesiloxy)-phenyl]-phenyliodoniumtetrakis-(pentafluorophenyl)-borat, Bis-(4-tert-butylphenyl)-iodoniumhexafluoroantimonat, Bis-(4-tert-butylphenyl)-iodoniumhexafluorophosphat, Bis-(4-tert-butylphenyl)-iodoniumtrifluorosulfonat, Bis-(4-tert-butylphenyl)-iodoniumtetrafluoroborat, Bis-(dodecylphenyl)-iodoniumhexafluoroantimonat, Bis-(dodecylphenyl)-iodoniumtetrafluoroborat, Bis-(dodecylphenyl)-iodoniumhexafluorophosphat, Bis-(dodecylphenyl)-iodoniumtrifluoromethylsulfonat, Di-(dodecylphenyl)-iodoniumhexafluoroantimonat, Di-(dodecylphenyl)-iodoniumtriflat, Diphenyliodoniumbisulfat, 4,4'-Dichlorodiphenyliodoniumbisulfat, 4,4'-Dibromodiphenyliodoniumbisulfat, 3,3'-Dinitrodiphenyliodoniumbisulfat, 4,4'-Dimethyldiphenyliodoniumbisulfat, 4,4'-Bis-succinimidodiphenyliodoniumbisulfat, 3-Nitrodiphenyliodoniumbisulfat, 4,4'-Dimethoxydiphenyliodoniumbisulfat, Bis-(dodecylphenyl)-iodoniumtetrakis-(pentafluorophenyl)-borat, (4-Octyloxyphenyl)-phenyliodoniumtetrakis-(3,5-bis-trifluoro-methylphenyl)-borat und (Tolylcumyl)-iodoniumtetrakis-(pentafluorophenyl)-borat, und Ferrocenium-Salze (siehe zum Beispiel EP 0 542 716 B1) wie η5-(2,4-cyclopentadien-1-yl)-[(1,2,3,4,5,6,9)-(1-methylethyl)-benzol]-eisen.

Photoinitiatoren werden typischerweise einzeln oder als Kombination von zwei oder mehreren Photoinitiatoren eingesetzt. Beim Einsatz von Photoinitiatoren sind auch Kombinationen mit anderen Additiven für die Anpassung der Aktivierungswellenlänge des Photoinitiationssystems an das gewählte Emissionsspektrum möglich, für die auf dem Fachmann bekannte Literatur, wie z.B. "Industrial Photoinitiators: A technical guide" 2010 von A.W. Green, verwiesen wird. Bevorzugt ist aber eine erfindungsgemäße aushärtbare Klebemasse, wobei die aushärtbare Klebemasse im Wesentlichen keine Additive für die Anpassung der Aktivierungswellenlänge umfasst.

Bevorzugt ist weitgehend unabhängig von der Auswahl des spezifischen kationischen Initiators eine erfindungsgemäße aushärtbare Klebemasse, wobei der kombinierte Massenanteil der kationischen Initiatoren in der aushärtbaren Klebemasse im Bereich von 0,1 bis 7 %, bevorzugt im Bereich von 0,3 bis 5 %, besonders bevorzugt im Bereich von 0,5 bis 4 %, liegt, bezogen auf die Masse der aushärtbaren Klebemasse.

Bevorzugt ist weitgehend unabhängig von der Auswahl des spezifischen Farbstoffs eine erfindungsgemäße aushärtbare Klebemasse, wobei der kombinierte Massenanteil der Farbstoffe in der aushärtbaren Klebemasse im Bereich von 0,05 bis 1 %, bevorzugt im Bereich von 0,1 bis 0,3 %, liegt, bezogen auf die Masse der aushärtbaren Klebemasse.

Bevorzugt ist zusätzlich oder alternativ auch eine erfindungsgemäße aushärtbare Klebemasse, wobei der kombinierte Massenanteil der Farbstoffe in der aushärtbaren Klebemasse 0,25 % oder weniger, bevorzugt 0,2 % oder weniger, beträgt, bezogen auf die Masse der aushärtbaren Klebemasse, und/oder wobei der kombinierte Massenanteil der Farbstoffe in der aushärtbaren Klebemasse 0,1 % oder mehr, bevorzugt 0,15 % oder mehr, beträgt, bezogen auf die Masse der aushärtbaren Klebemasse.

Es kann als Vorteil der erfindungsgemäßen aushärtbaren Klebemassen gesehen werden, dass diese hinsichtlich der Anwesenheit von weiteren Komponenten sehr flexibel sind, wodurch es in vorteilhafter Weise möglich wird, die physikalisch-chemischen Eigenschaften besonders gezielt an die jeweiligen Anforderungen der Anwendungen anzupassen. Bevorzugt ist beispielsweise eine erfindungsgemäße aushärtbare Klebemasse, wobei die aushärtbare Klebemasse ein oder mehrere Polyole umfasst, bevorzugt in einem kombinierten Massenanteil im Bereich von 0,5 bis 15 %, besonders bevorzugt im Bereich von 1 bis 10 %. Bevorzugt ist zusätzlich oder alternativ auch eine erfindungsgemäße aushärtbare Klebemasse, wobei die aushärtbare Klebemasse einen oder mehrere weitere Additive umfasst, bevorzugt in einem kombinierten Massenanteil im Bereich von 0,1 bis 50 %, besonders bevorzugt im Bereich von 0,2 bis 40 %, bezogen auf die Masse der aushärtbaren Klebemasse, und/oder wobei das eine oder die mehreren weiteren Additive bevorzugt ausgewählt sind aus der Gruppe bestehend aus Klebharzen, Alterungsschutzmitteln, Lichtschutzmitteln, UV-Absorbern, rheologischen Additiven und Additiven zur Erhöhung der Opazität.

In speziellen Anwendungen kann für die erfindungsgemäße aushärtbare Klebemasse bzw. das Klebeband umfassend die erfindungsgemäße aushärtbare Klebemassen eine Opazität ("Haze") gewünscht sein. Solche spezielle Anwendungen sind zum Beispiel Klebebänder zur elektrischen Isolierung eines Gegenstandes, wie z.B. Batteriezellen. Hier ist eine gewisse Opazität zur Verdeckung optischer Mängel wie z.B. Kratzer wünschenswert. Bevorzugt ist dementsprechend die erfindungsgemäße aushärtbare Klebemasse die weiterhin ein oder mehrere Additive zur Erhöhung der Opazität umfasst. Besonders vorteilhaft in Bezug auf Aushärtbarkeit der Klebmasse, Farbstärke und Deckkraft haben sich Kombinationen aus einem kombinierten Massenanteil von maximal 0,3 % eines oder mehreren Farbstoffen und mit einem kombinierten Massenanteil von maximal 5 % eines oder mehreren Additive zur Erhöhung der Opazität gezeigt, bezogen auf die Masse der aushärtbaren Klebemasse.

Insbesondere bevorzugt sind erfindungsgemäße aushärtbare Klebemasse, wobei der kombinierte Massenanteil der Farbstoffe in der aushärtbaren Klebemasse im Bereich von 0,1 bis 0,25 % und der kombinierte Massenanteil der Additive zur Erhöhung der Opazität, insbesondere von Titandioxid, im Bereich von 0,1 bis 0,3 % liegt, bezogen auf die Masse der aushärtbaren Klebemasse.

Ein besonderer Fall der weiteren Komponenten, welche der Einstellung der Eigenschaften von Klebemassen dienen, sind unlösliche Füllstoffe, die der aushärtbaren Klebemasse zugesetzt werden können, um eine gefüllte aushärtbare Klebemasse zu erhalten. Bei diesen handelt es sich um partikuläre Füllstoffe mit einem mittleren Partikeldurchmesser (D50) von 5 µm oder mehr, bevorzugt 10 µm oder mehr, besonders bevorzugt 20 µm oder mehr, die in der aushärtbaren Klebemasse nicht löslich sind und in dieser entsprechend als Dispersion vorliegen sowie um makroskopische Füllstoffe wie beispielsweise Fasern. Bevorzugt sind die unlöslichen Füllstoffe ausgewählt aus der Gruppe bestehend aus partikulären Füllstoffen, wie beispielsweise Titandioxid. Besonders bevorzugt sind die unlöslichen Füllstoffe ausgewählt aus der Gruppe bestehend aus expandierbaren Polymerhohlkugeln, nicht expandierbaren Polymerhohlkugeln, Polymervollkugeln, Glashohlkugeln, Glasvollkugeln, keramische Hohlkugeln, keramische Vollkugeln und/oder Kohlenstoffvollkugeln. In Frage kommen als unlösliche Füllstoffe beispielsweise jedoch auch Fasern, Gelege, Plättchen und Stäbchen aus in der aushärtbaren Klebemasse unlöslichen Materialien. Durch ihre teilweise schon makroskopischen Abmessungen und die fehlende Löslichkeit haben diese im Wesentlichen keinen Einfluss auf die vorstehend offenbarten Zusammenhänge der Zusammensetzungschemie der aushärtbaren Klebemassen, sondern liegen vielmehr in heterogener Mischung mit der aushärtbaren Klebemasse vor. Entsprechend werden diese unlöslichen Füllstoffe im Rahmen der vorliegenden Erfindung nicht der aushärtbaren Klebemasse zugerechnet und werden entsprechend bei der Berechnung von Massenanteilen relativ zur Masse der aushärtbaren Klebemasse nicht berücksichtigt. Im Rahmen der vorliegenden Erfindung wird vielmehr definiert, dass der Zusatz von unlöslichen Füllstoffen zu einer erfindungsgemäßen aushärtbaren Klebemasse in einer gefüllten aushärtbaren Klebemasse resultiert, d.h. einer gefüllten aushärtbaren Klebemasse, umfassend:
i) eine erfindungsgemäße aushärtbare Klebemasse, bevorzugt wie vorstehend als bevorzugt offenbart, und
ii) einen oder mehrere unlösliche Füllstoffe.

Besonders bevorzugt liegt der kombinierte Massenanteil der unlöslichen Füllstoffe dabei im Bereich von 1 bis 50 %, bevorzugt im Bereich von 2 bis 40 %, besonders bevorzugt im Bereich von 5 bis 30 %, bezogen auf die Masse der gefüllten aushärtbaren Klebemasse.

Füllstoffe sind für flüssige aushärtbare Klebemassen zumeist nicht geeignet. Zudem bedingen die meisten Füllstoffe eine in vielen Fällen unerwünschte Opazität, die die Eindringtiefe der UV-Strahlung unnötig abschwächt. Aus diesem Grund sind erfindungsgemäße aushärtbare Klebemasse bevorzugt, denen kein Füllstoff zugesetzt wird und die entsprechend im Wesentlichen frei von Füllstoffen sind.

Erfindungsgemäße aushärtbare Klebemassen können beispielsweise direkt als Klebemassen eingesetzt werden, wobei sie je nach Applikationsmethode insbesondere in Form von Bändern bereitgestellt werden können. Die Erfindung betrifft somit auch ein Klebeband, insbesondere ein reaktives Klebeband, umfassend als Klebeschicht eine erfindungsgemäße aushärtbare Klebemasse, wobei das Klebeband bevorzugt eine Trägerschicht umfasst.

Mit Blick auf möglichst günstige Handhabungseigenschaften werden besonders vorteilhafte Resultate regelmäßig dann erzielt, wenn erfindungsgemäße aushärtbare Klebemassen als Klebeschicht eines ein- oder doppelseitigen Klebebandes eingesetzt werden, welches zudem eine Trägerschicht umfasst oder wenn die Klebeschicht auf einer Trennschicht, beispielweise einem Liner, angeordnet wird, von dem die Klebeschicht einfach abgelöst werden kann.

Der Begriff Klebeband ist für den Fachmann im Bereich der Klebetechnik klar. Im Rahmen der vorliegenden Erfindung bezeichnet der Ausdruck Band alle dünnen, flächigen Gebilde, d.h. Gebilde mit einer überwiegenden Ausdehnung in zwei Dimensionen, insbesondere Folien, Folienabschnitte und Etiketten, bevorzugt Bänder mit ausgedehnter Länge und begrenzter Breite sowie entsprechende Bandabschnitte.

Die Trägerschicht bezeichnet zumeist die Schicht eines solchen mehrschichtigen Klebebandes, die die mechanischen und physikalischen Eigenschaften des Klebebandes, wie beispielsweise die Reißfestigkeit, Dehnbarkeit, Isolations- oder Rückstellvermögen, maßgeblich bestimmt. Übliche Materialien für die Trägerschicht sind beispielsweise Gewebe, Gelege und Kunststofffolien, zum Beispiel PET-Folien und Polyolefin-Folien. Die Trägerschicht kann jedoch auch selbst haftklebrig sein. Das erfindungsgemäße Klebeband kann in einer bevorzugten Ausführungsform ein doppelseitiges Klebeband sein, dessen Trägerschicht auf beiden Seiten mit einer erfindungsgemäßen aushärtbaren Klebemasse versehen ist.

Die Trägerschicht kann auch elektrisch isolierende Eigenschaften haben, so dass das entsprechende erfindungsgemäße Klebeband elektrisch isolierende Eigenschaft hat und zur elektrischen Isolierung eines Gegenstandes verwendet werden kann. Hierfür können isolierende Trägerfolien mit einem spezifischen Durchgangswiderstand von >10¹⁵ Ωcm, bevorzugt >10¹⁶ Ωcm, weiter bevorzugt >10¹⁷ Ωcm, bestimmt gemäß DIN EN 62631-3-1 (VDE 0307-3-1): 2017-01 verwendet. Das erfindungsgemäße Klebeband kann demzufolge in einer bevorzugten Ausführungsform ein doppelseitiges Klebeband sein, dessen isolierende Trägerfolie auf beiden Seiten mit einer erfindungsgemäßen aushärtbaren Klebemasse versehen ist. In einer anderen bevorzugten Variante ist das erfindungsgemäße Klebeband ein einseitiges Klebeband dessen elektrisch isolierende Trägerfolie auf einer Seite mit einer erfindungsgemäßen aushärtbaren Klebemasse versehen ist. Solche einseitigen Klebebänder eignen sich hervorragend, um Batteriezellen in Hybridfahrzeuge und reinen Elektrofahrzeuge zu ummanteln.

Bevorzugt umfasst die isolierende Trägerfolie ein oder mehrere Materialien, ausgewählt aus der Gruppe bestehend aus Polyimid, Polybenzimidazol, Polyamidimid, Polyetherimid, Polyacetal, Polyphenylensulfid, Polyetheretherketon, Polytetrafluorethylen, Polyamid 6, ultrahochmolekulargewichtiges Polyethylen, Polypropylen, Vinylchloridharz, Polystyrol, Polyethylentherephthalat, Acrylnitril-Butadien-Styrol, Polycarbonat, Polyvinylchlorid, Ethylen-Vinylacetat-Copolymer und Polyester, weiter bevorzugt aus der Gruppe bestehend aus Polypropylen, Polyethylentherephthalat, Polycarbonat und Polyvinylchlorid, weiter bevorzugt aus der Gruppe bestehend aus Polypropylen und Polyethylentherephthalat.

Hinsichtlich der Dicke des Trägers gibt es grundsätzlich keine besonderen Einschränkungen. Bevorzugt weist der Träger eine Dicke im Bereich von 20 µm bis 100 µm, weiter bevorzugt im Bereich 30 µm bis 90 µm, weiter bevorzugt im Bereich von 40 µm bis 75 µm auf.

In erfindungsgemäßen Klebebändern können die Klebeschichten mit einer Trennabdeckung, einem sogenannten Releaseliner, abgedeckt sein, um ein problemloses Abwickeln zu ermöglichen und die Haftklebemasse vor Verschmutzung zu schützen. Solche Releaseliner bestehen üblicherweise aus einer ein- oder beidseitig silikonisierten Kunststofffolie (z.B. PET oder PP) oder einem silikonisierten Papierträger.

Offenbart wird ausgehend von der erfindungsgemäßen aushärtbaren Klebemasse und dem erfindungsgemäßen Klebeband zudem die Verwendung einer erfindungsgemäßen aushärtbaren Klebemasse oder eines erfindungsgemäßen Klebebandes, zur Verklebung von zwei oder mehr Komponenten durch Aushärtung der aushärtbaren Klebemasse, bevorzugt in einem erfindungsgemäßen Verfahren.

Nachfolgend werden die Erfindung und bevorzugte Ausführungsformen der Erfindung unter Bezugnahme auf Experimente weiter erläutert und beschrieben.

### A. Herstellung der aushärtbaren Klebemassen:

Aus den in Tabelle 1 zusammengefassten Bestandteilen, wurden durch Vermischen der Komponenten in üblicher Weise aushärtbare Klebemassen erhalten (als Laborausstriche aus einer 40%igen Butanonlösung).

**Tabelle 1 - Zusammensetzung der aushärtbaren Klebemassen, alle Angaben in Gewichtsteilen.**

| | E1 | E2 | E3 | E4 | E5 | V1 | V2 |
|---|---|---|---|---|---|---|---|
| Levamelt 700 | 10 | 40 | 40 | 40 | 40 | 40 | 40 |
| D.E.R. 331 | 60 | 30 | 30 | 30 | 30 | 30 | 30 |
| D.E.R. 662E | 20 | 20 | 20 | 20 | 20 | 20 | 20 |
| Capa 2054 | 10 | 10 | 10 | 10 | 10 | 10 | 10 |
| Benzoyl-Leuco-Methylenblau | 0,2 | | | | | | |
| Nilblau | | 0,2 | | | | | |
| Ethylviolett | | | 0,1 | | | | |
| 1,4-Bis(mesitylamino)anthrachinon | | | | 0,1 | | | |
| Kupferphthalocyanin | | | | | 0,1 | | |
| Sudanblau II | | | | | | 0,2 | 0,1 |
| Triarylsulfoniumhexafluorophosphat (50% in Propylencarbonat) | 3 | 3 | 3 | 3 | 3 | | 3 |
| Diaryliodoniumhexafluorophosphat (75% in Propylencarbonat) | | | | | | 1,5 | |
| 2,2-Dimethoxy-2-phenylacetophenon | | | | | | 1 | |

Als (Co-)Polymer wurde das kommerziell erhältliche Ethylen-Vinylacetat-Copolymer Levamelt^{®} 700 (Vinylacetat Gehalt von 70 Gewichtsprozent) der Firma Arlanxeo eingesetzt.

Als Epoxid-Verbindungen wurden ein kommerziell erhältlicher fester Bisphenol-A-Diglycidylether (D.E.R. 662E) und ein kommerziell erhältlicher flüssiger Bisphenol-A-Diglycidylether (D.E.R. 331) der Firma Olin eingesetzt.

Als kationischer Initiator wurde in den Proben E1 bis E4, V2 und V3 Triarylsulfoniumhexafluorophosphat (50% in Propylencarbonat; CAS: 109037-77-6; die Angabe zur Einwaage in Tabelle 1 bezieht sich auf die Lösung) eingesetzt.

Als kationisches Initiatorsystem wurde in der Probe V1 Diaryliodonium hexafluorophosphat (Omnicat 250, CAS: 344562-80-7; 75% in Propylencarbonat; die Angabe zur Einwaage in Tabelle 1 bezieht sich auf die Lösung) in Kombination mit 2,2-Dimethoxy-2-phenylacetophenon (Irgacure 651, CAS: 24650-42-8) eingesetzt.

Als Polyol wurde ein kommerziell erhältliches Polyesterpolyol auf der Basis von Polycaprolacton (Capa 2054) der Firma Ingevity eingesetzt.

Aus den hergestellten aushärtbaren Klebemassen wurden für die festen aushärtbaren Klebemassen E2 bis E5 sowie V1 bis V3 durch Ausstriche Klebebänder mit einer Dicke von etwa 100 µm hergestellt.

### B. Klebeexperimente & Farbbewertung:

### Klebkraft:

Die Klebkräfte wurden analog zur ISO 29862 (Methode 3) bei 23 °C und 50 % relativer Luftfeuchte bei einer Abzugsgeschwindigkeit von 300 mm/min und einem Abzugswinkel von 180° bestimmt. Die Dicke der Klebstoffschicht betrug dabei jeweils 100 µm. Als Verstärkungsfolie wurde eine geätzte PET-Folie mit einer Dicke von 50 µm verwendet, wie sie von der Fa. Coveme (Italien) erhältlich ist. Als Substrat wurden Stahlplatten entsprechend der Norm verwendet. Die Verklebung des unausgehärteten Messstreifens wurde dabei mittels einer Anrollmaschine mit 4 kg bei einer Temperatur von 23 °C vorgenommen. Die Klebebänder wurden sofort nach der Applikation abgezogen. Der Messwert (in N/cm) ergab sich als Mittelwert aus drei Einzelmessungen und das Versagensbild wurde wie folgt dokumentiert: adhäsiven Versagen (A) oder ein kohäsives Versagen (K).

### Färbung:

Für die aushärtbaren Klebemassen wurde jeweils die Farbe der ausgehärteten Klebemassen bestimmt 7d nach einer Initiation der Härtung mit einer Höhnle 365 nm UV-LED und einer Dosis von 4 J/cm²).

Die Ergebnisse sind in Tabelle 2 gezeigt.

**Tabelle 2 - Zusammenfassung der Klebeexperimente**

| | E1 | E2 | E3 | E4 | E5 | V1 | V2 |
|---|---|---|---|---|---|---|---|
| Bruchbild* / Klebkraft (vor Aushärtung) | K (n.b.) | A (>1 N/cm) | A (>1 N/cm) | A (>1 N/cm) | A (>1 N/cm) | A (>1 N/cm) | A (>1 N/cm) |
| Farbe vor Aushärtung | farblos | blau | blau | blau | blau | blau | blau |
| Farbe nach Aushärtung | blau | blau | blau | blau | blau | gelb | lila |

| | | | | | | | |
|---|---|---|---|---|---|---|---|
| * A: adhäsives Versagen; K: kohäsives Versagen | | | | | | | |

Anhand des Bruchbildes im Klebkrafttest lässt sich für die Proben E2 bis E5 eine vorteilhafte Kohäsion und haftklebrige Eigenschaften erkennen. Die flüssige Klebemasse E1 zeigt erwartungsgemäß vor der Aushärtung ein kohäsives Versagen, so dass sich keine sinnvolle Klebkraft bestimmen lässt.

Für die erfindungsgemäßen aushärtbaren Klebemassen zeigt sich nach der Aushärtung in vorteilhafter Weise die gewünschte blaue Farbe. Die Proben E4 und E5 sind dabei bereits vor der Bestrahlung blau, E2 und E3 durchlaufen hingegen zwischenzeitlich einen Farbwechsel zum finalen ausgehärteten blaugefärbten Zustand. Auch nach Feucht-Wärmelagerung (7 Tage Härtung bei 23 °C und 50 % r.F. und 48 h Lagerung bei 85 °C und 85 % r.F.) bleibt die blaue Farbe erhalten.

V1 zeigt exemplarisch, wie schwierig es sich für den Fachmann darstellt, einen geeigneten Farbstoff auszuwählen. So kommt bei Verwendung eines Initiatorsystems mit einem Additiv für die Anpassung der Aktivierungswellenlänge des Photoinitiationssystems für Sudanblau II überraschend eine Gelbfärbung zustande. V2 ist vor der Bestrahlung zwar bläulich, jedoch wird nach der Bestrahlung eine sich über die Zeit im Farbton immer noch leicht verändernde ausgehärtete lila Klebmasse erhalten.

## Patentansprüche

1. Aushärtbare Klebemasse, umfassend:
a) ein oder mehrere (Co-)Polymere,
b) eine oder mehrere polymerisierbare Epoxid-Verbindungen,
c) einen oder mehrere kationische Initiatoren, und
d) einen oder mehrere Farbstoffe,
wobei der eine oder die mehreren Farbstoffe ausgewählt sind aus der Gruppe bestehend aus Benzoyl-Leuco-Methylenblau, Leuco-Kristallviolett, Kristallviolettlacton, Ethylviolett, Methylviolett, Methylgrün, Ethylgrün, Nilblau, 1,4-Bis(mesitylamino)anthrachinon und Kupferphthalocyanin.

2. Aushärtbare Klebemasse nach Anspruch 1, wobei die aushärtbare Klebemasse eine Haftklebemasse ist.

3. Aushärtbare Klebemasse nach einem der Ansprüche 1 oder 2, wobei der eine die mehreren Farbstoffe ausgewählt sind aus der Gruppe bestehend aus Benzoyl-Leuco-Methylenblau, Leuco-Kristallviolett, Kristallviolettlacton, Ethylviolett, Methylviolett, Nilblau, 1,4-Bis(mesitylamino)anthrachinon und Kupferphthalocyanin.

4. Aushärtbare Klebemasse nach Anspruch 3, wobei der eine die mehreren Farbstoffe ausgewählt sind aus der Gruppe bestehend aus Benzoyl-Leuco-Methylenblau, Ethylviolett, Nilblau, 1,4-Bis(mesitylamino)anthrachinon und Kupferphthalocyanin.

5. Aushärtbare Klebemasse nach einem der Ansprüche 1 bis 4, wobei der kombinierte Massenanteil der Farbstoffe in der aushärtbaren Klebemasse im Bereich von 0,05 bis 1 % liegt, bezogen auf die Masse der aushärtbaren Klebemasse.

6. Aushärtbare Klebemasse nach einem der Ansprüche 1 bis 5, wobei der kombinierte Massenanteil der kationischen Initiatoren in der aushärtbaren Klebemasse im Bereich von 0,1 bis 7 % liegt, bezogen auf die Masse der aushärtbaren Klebemasse.

7. Aushärtbare Klebemasse nach einem der Ansprüche 1 bis 6, wobei der kombinierte Massenanteil der (Co-)Polymere in der aushärtbaren Klebemasse im Bereich von 1 bis 70 % liegt, bezogen auf die Masse der aushärtbaren Klebemasse.

8. Aushärtbare Klebemasse nach einem der Ansprüche 1 bis 7, wobei der kombinierte Massenanteil der polymerisierbaren Epoxid-Verbindungen in der aushärtbaren Klebemasse im Bereich von 35 bis 95 % liegt, bezogen auf die Masse der aushärtbaren Klebemasse.

9. Aushärtbare Klebemasse nach einem der Ansprüche 1 bis 8, wobei die aushärtbare Klebemasse eine oder mehrere polymerisierbare Epoxid-Verbindungen umfasst, die ausgewählt sind aus der Gruppe von Epoxid-Verbindungen, die bei 25 °C Feststoffe oder hochviskose Stoffe mit einer dynamische Viskosität von 50 Pa s oder mehr sind, und/oder wobei die aushärtbare Klebemasse eine oder mehrere polymerisierbare Epoxid-Verbindungen umfasst, die ausgewählt sind aus der Gruppe von Epoxid-Verbindungen, die bei 25 °C eine Flüssigkeit mit einer dynamischen Viskosität von 40 Pa s oder weniger sind.

10. Klebeband, umfassend als Klebeschicht eine aushärtbare Klebemasse nach einem der Ansprüche 1 bis 9.
